# FASCICULE DE BREVET EUROPEEN

(11) **EP 4 331 452 B1**
(45) Date de publication et mention de la délivrance du brevet: **13.08.2025**
(21) Numéro de dépôt: 23192515.7
(22) Date de dépôt: 21.08.2023
(51) Int. Cl.: A47J 45/07

(54) **DISPOSITIF DE PRÉHENSION DE RÉCIPIENT**
BEHÄLTERGREIFVORRICHTUNG
CONTAINER GRIPPER

(30) Priorité: 24.08.2022 TR 202213288; 31.01.2023 FR 2300863
(43) Date de publication de la demande: 06.03.2024
(73) Titulaire: Sanmiro S.r.l., 23861 Cesana Brianza (LC) (IT); Ayka Bakalit ve Metal Sanayi ve Ticaret Limited Sirketi, 34555 Istanbul (TR)
(72) Inventeur: AHMET ILKER, Sevim, 34555 ISTANBUL (TR); VALSECCHI, Paolo, 23861 CESANA BRIANZA (IT)
(74) Mandataire: Cabinet Boettcher

(56) Documents cités:
- EP-B1- 2 494 896
- KR-A- 20110 096 999
- US-A- 5 704 092
- US-B2- 7 478 735

## Description

### ARRIERE PLAN DE L'INVENTION

La présente invention se rapporte au domaine des dispositifs de préhension de récipient.

Il est connu du document brevet EP0769263B1 un dispositif de préhension de récipient comportant :
- une poignée de préhension ;
- un premier organe de serrage monté coulissant par rapport à la poignée de préhension entre des première et seconde positions de coulissement et présentant une première surface de serrage ;
- un second organe de serrage présentant une seconde surface de serrage en vis-à-vis de la première surface de serrage pour former une pince de serrage de récipient entre les première et seconde surfaces de serrage ;

- un levier d'actionnement monté pivotant par rapport à la poignée de préhension entre une position de serrage et une position de libération.

Le dispositif de préhension comporte un mécanisme de liaison agencé de sorte que le déplacement du levier d'actionnement de la position de libération vers la position de serrage entraîne le déplacement du premier organe de serrage de sa première position vers sa seconde position et le rapprochement de la première surface de serrage par rapport à la seconde surface de serrage.

Un tel dispositif est aussi appelé poignée amovible pour récipient culinaire. Ce dispositif de préhension d'un récipient du document brevet EP0769263B1 présente également un mécanisme de liaison, pour relier le levier d'actionnement au premier organe de serrage, qui comprend une biellette articulée d'une part sur une glissière du levier d'actionnement et d'autre part sur une extrémité terminale d'une tige appartenant au premier organe de serrage. Ce mécanisme de liaison comporte aussi un ressort de compression porté par le levier d'actionnement de manière à s'opposer élastiquement au coulissement de la biellette le long de la glissière du levier de commande lors du déplacement du levier vers sa position de serrage.

Ce mécanisme de liaison est complexe et couteux à fabriquer puisqu'il nécessite de créer une glissière sur le levier d'actionnement, d'utiliser une biellette et de former des assemblages de type pivot aux extrémités de la biellette. Par ailleurs, la présence de la biellette crée un risque de coincement des doigts entre la biellette et la poignée. Ce dispositif de préhension de récipient présente également un risque de passage accidentel du levier d'actionnement de sa position de serrage vers sa position de libération par exemple en cas d'appui non intentionnel sur le levier d'actionnement. Le maintien / serrage du récipient entre les organes de serrage est dès lors incertain ce qui peut présenter un risque de chute du récipient et de brulure si ce récipient est chaud et/ou si il contient une substance chauffée. D'autres dispositifs de préhension de récipients de l'art antérieur sont également connus des documents US7478735B2, EP2494896B1 et US5704092A.

### OBJET DE L'INVENTION

Un objet de la présente invention est de fournir un dispositif de préhension de récipient résolvant, ou du moins minimisant, tout ou partie des inconvénients de l'art antérieur précité.

### RESUME DE L'INVENTION

A cet effet, l'invention porte sur un dispositif de préhension de récipient selon la revendication 1.

Grâce à l'invention, le déplacement du premier organe de serrage 1 de la première position vers la seconde position est commandé, par l'intermédiaire de la came (formée sur le levier d'actionnement) en appui glissant contre la contre-came, en fonction du pivotement du levier d'actionnement de sa position de libération vers sa position de serrage.

Toute liaison mécanique entre une came et une contre-came en appui l'une contre l'autre implique un profil de la came et un profil de la contre-came qui définissent ensemble une unique relation entre :
- le mouvement de pivotement de la came par rapport à la poignée (la came est pivotante avec le levier qui la porte) ; et

- le mouvement de coulissement / translation de la contre-came par rapport à la poignée (la contre-came est assujettie au premier organe de serrage pour qu'ils coulissent ensemble par rapport à la poignée de préhension).

L'usage de came et de contre-came permet de simplement définir la relation de transformation du mouvement de pivotement du levier par rapport à la poignée en un mouvement de translation / coulissement du premier organe de serrage par rapport à la poignée.

Les profils de came et de contre-came permettent de définir pour chaque position adoptée par le levier d'actionnement lors de son pivotement :
- une unique position de coulissement du premier organe de serrage par rapport à la poignée ; et
- une unique valeur de rapport entre le couple mécanique appliqué sur le levier et l'effort de serrage correspondant transmissible au niveau du premier organe de serrage (l'effort de serrage est la force qui peut être appliquée par l'organe de serrage sur une pièce rigide serrée entre les première et seconde surfaces de serrage).

La valeur du rapport peut être constante tout au long du déplacement du levier ou être variable pour obtenir un comportement ergonomique particulier du dispositif.

En d'autres termes, la came et la contre-came permettent de définir un rapport entre le couple appliqué par l'utilisateur sur le levier et l'effort de serrage qui peut être appliqué par le premier organe de serrage et dont la valeur évolue en fonction de la position du levier (c'est-à-dire en fonction de la position courante adoptée par le levier par rapport à la poignée entre sa position de libération et sa position de serrage).

Cette évolution du rapport entre couple et force de serrage est reproductible à chaque fois que l'utilisateur actionne du dispositif de préhension ce qui est un avantage ergonomique.

Par ailleurs, la précision de commande autorisée par le mécanisme de liaison à came et contre-came permet l'usage d'un mécanisme de verrouillage avec une position précise de verrouillage / déverrouillage.

Lorsque déverrouillé, le mécanisme de verrouillage laisse le levier d'actionnement se déplacer librement vers sa position de libération, sous l'effet de l'organe élastique de rappel et sans que l'utilisateur n'ait à pousser le levier d'actionnement vers sa position de libération.

La poussée du levier d'actionnement vers la position de libération se fait automatiquement et uniquement sous l'effet de l'organe élastique de rappel dès que le poussoir du mécanisme de verrouillage est déplacé en position de déverrouillage.

Le dispositif de préhension de récipient peut être commandé de manière précise et d'une seule main, tant en serrage qu'en desserrage de récipient.

La sécurité d'usage du dispositif de préhension de récipient est aussi améliorée puisque le serrage du récipient entre les premier et seconde surfaces de serrage ne peut être relâché qu'en actionnant le poussoir et en relâchant simultanément le couple appliqué sur le levier d'actionnement par les doigts de l'utilisateur.

Ainsi, le dispositif de préhension de récipient selon l'invention est particulièrement sûr d'usage tout en étant simple et économique à fabriquer.

### BREVE DESCRIPTION DES DESSINS

D'autres caractéristiques et avantages de l'invention ressortiront de la description qui en est faite ci-après, à titre indicatif et nullement limitatif, en référence aux dessins annexés, dans lesquels:

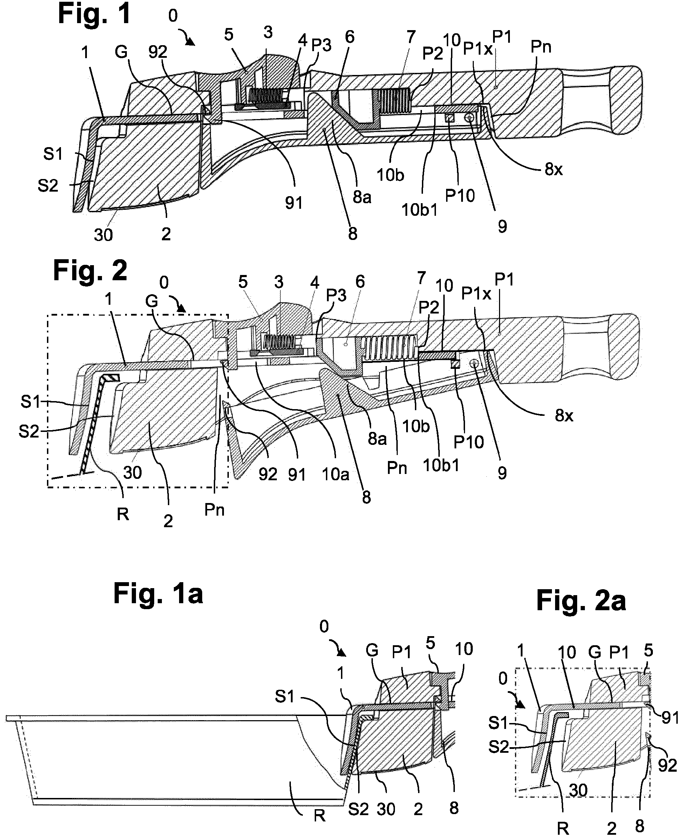

[Fig. 1] la figure 1 est une vue en coupe longitudinale d'un dispositif de préhension 0 de récipient R selon un premier mode de réalisation de l'invention, le levier d'actionnement 8 étant en position de serrage et les première et seconde surfaces de serrage S1, S2 étant proches l'une de l'autre (le premier organe de serrage 1 est ici dans sa seconde position de coulissement) ;
[Fig. 2] la figure 2 est une vue en coupe longitudinale du dispositif de préhension 0 de récipient R selon le premier mode de réalisation de l'invention, le levier d'actionnement 8 étant en position de libération et les première et seconde surfaces de serrage S1, S2 étant écartées l'une de l'autre pour permettre le passage libre d'une paroi périphérique d'un récipient R entre ces surfaces S1, S2 (le premier organe de serrage 1 est ici dans sa première position de coulissement) ;
[Fig. 1a] la figure 1a est une vue en coupe longitudinale partielle du dispositif de préhension 0 de récipient R selon le premier mode de réalisation de l'invention, le levier d'actionnement 8 étant en position de serrage et la paroi périphérique de récipient R étant serrée entre ces surfaces S1, S2 pour pouvoir soulever le récipient R à l'aide du dispositif de préhension 0 ;
[Fig. 2a] la figure 2a est une vue en coupe longitudinale partielle du dispositif de préhension 0 de récipient R selon le premier mode de réalisation de l'invention, le levier d'actionnement 8 étant en position de libération et la paroi périphérique de récipient R étant libre de déplacement entre les surfaces S1, S2 formant pince pour être retirée ou insérée entre ces surfaces S1, S2 (le premier organe de serrage 1 est ici dans sa première position) ;

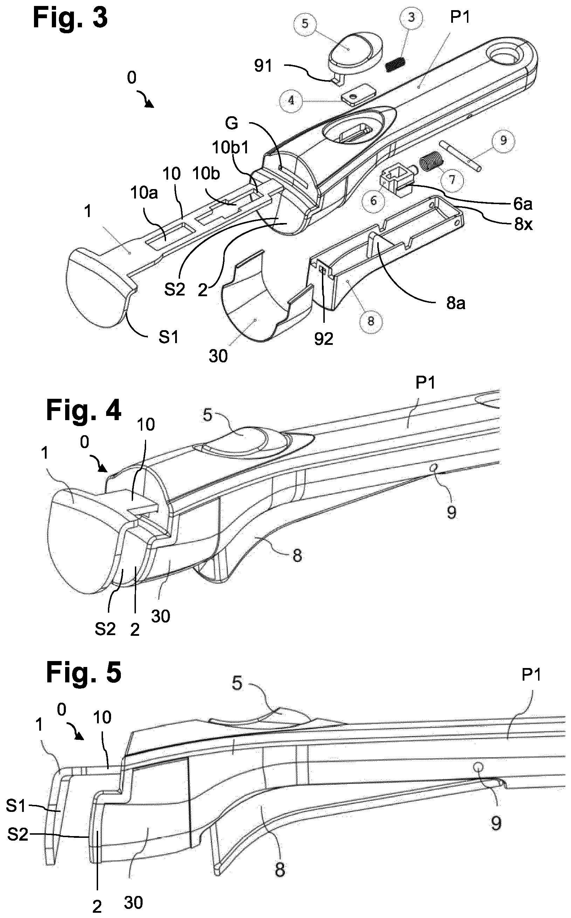

[Fig. 3] la figure 3 est une vue éclatée en perspective du dispositif de préhension 0 de récipient R selon le premier mode de réalisation de l'invention ;
[Fig. 4] la figure 4 est une vue en perspective du dispositif de préhension 0 de récipient R selon l'invention, le levier d'actionnement 8 étant en position de libération et le premier organe de serrage 1 étant dans sa première position (l'aspect extérieur du dispositif 0 est identique pour les premier et deuxième modes de réalisation de l'invention) ;
[Fig. 5] la figure 5 est une vue de côté du dispositif de préhension 0 de récipient R de la figure 4 ;

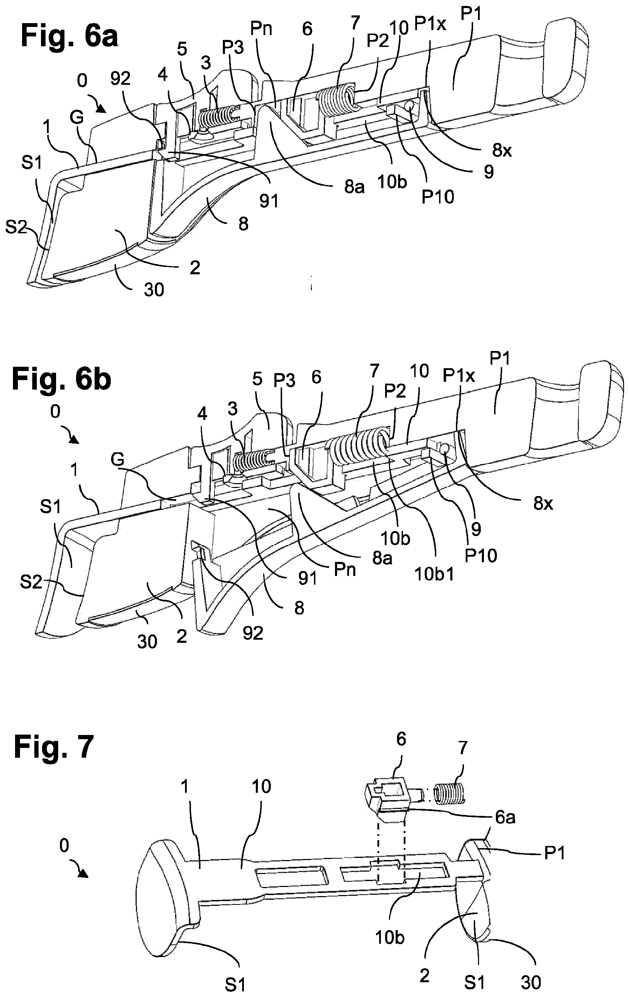

[Fig. 6a] la figure 6a est une vue en perspective d'une moitié du dispositif de préhension 0 de récipient R selon le premier mode de réalisation de l'invention alors que le levier d'actionnement 8 est en position de serrage, le premier organe de serrage 1 étant dans sa seconde position (le dispositif 0 est coupé selon un plan de coupe médian longitudinal, ce dispositif 0 étant symétrique de part et d'autre de ce plan de coupe médian) ;
[Fig. 6b] la figure 6b est une vue en perspective d'une moitié du dispositif de préhension 0 de récipient R selon le premier mode de réalisation de l'invention, le levier d'actionnement 8 étant en position de libération et le premier organe de serrage 1 étant dans sa première position ;
[Fig. 7] la figure 7 est une vue en perspective éclatée d'une partie du dispositif de préhension 0 selon le premier ou le second mode de réalisation de l'invention, cette figure 7 illustrant l'assemblage entre la contre-came 6 et la tige 10 du premier organe de serrage 1, cet assemblage permettant d'assujettir en translation / coulissement le premier organe de serrage 1 et la contre-came 6 tout au long du coulissement de la tige 10 par rapport à la poignée de préhension P1 ;

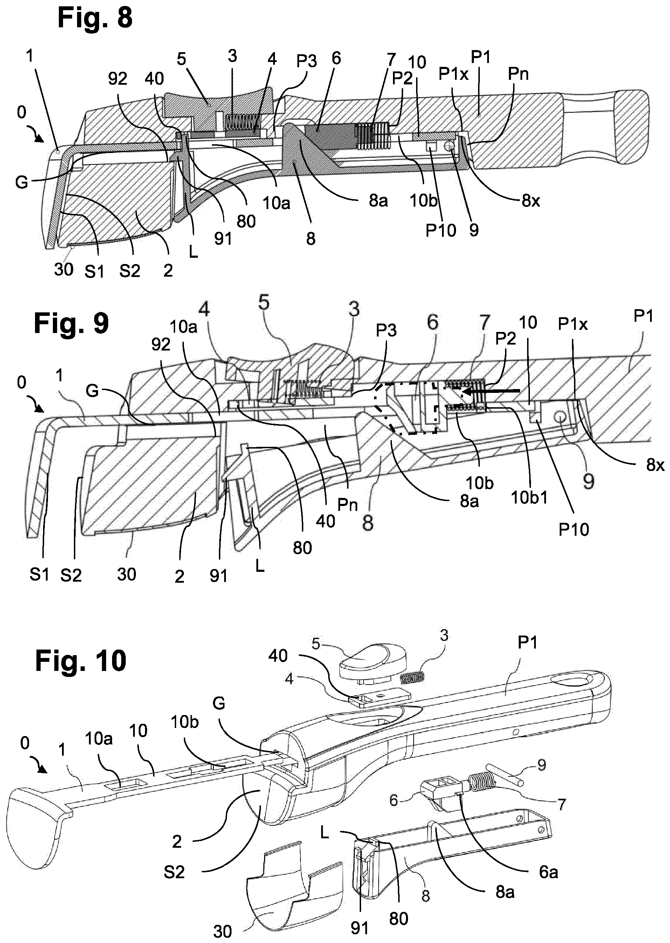

[Fig. 8] la figure 8 est une vue en coupe longitudinale d'un dispositif de préhension 0 selon un deuxième mode de réalisation de l'invention, le levier d'actionnement 8 étant en position de serrage et les première et seconde surfaces de serrage S1, S2 étant proches l'une de l'autre (sans récipient entre ces surfaces), le premier organe de serrage 1 étant dans sa seconde position de coulissement ;
[Fig. 9] la figure 9 est une vue en coupe longitudinale du dispositif de préhension 0 selon le deuxième mode de réalisation de l'invention, le levier d'actionnement 8 étant en position de libération et les première et seconde surfaces de serrage S1, S2 étant écartées l'une de l'autre pour permettre le passage libre d'une paroi périphérique d'un récipient R (la contre-came 6 est ici représentée en pointillés pour montrer son coulissement avec la tige 10 avec laquelle la contre-came 6 est assujettie en déplacement / coulissement, ce coulissement étant forcé par l'organe élastique de rappel 7 qui est en forme de ressort de compression hélicoïdal (Ce ressort 7 est d'un côté en appui axial contre la poignée P1 et d'un autre côté en appui axial contre la contre-came 6, la contre-came 6 présentant un plot de centrage s'étendant dans le ressort 7 pour le positionner par rapport à la contre-came 6) ;
[Fig. 10] la figure 10 est une vue éclatée en perspective du dispositif de préhension 0 selon le deuxième mode de réalisation de l'invention.

### DESCRIPTION DETAILLEE DE L'INVENTION

En référence aux figures 1 à 10, l'invention concerne essentiellement un dispositif de préhension 0 de récipient R appartenant au domaine des poignées amovibles des récipients R.

Comme illustré sur la figure 1a, un récipient R adapté à être porté par le dispositif de préhension 0 selon l'invention présente un fond, une paroi latérale périphérique (paroi annulaire), le fond et la paroi latérale périphérique délimitant un volume interne du récipient R ouvert vers l'extérieur du récipient R via une ouverture supérieure du récipient R. Le volume interne est destiné à contenir des aliments.

La paroi latérale périphérique du récipient R comporte un bord recourbé R1 délimitant la périphérie de l'ouverture supérieure du récipient R.

La paroi latérale périphérique du récipient R est ici évasée vers l'extérieur du récipient au niveau de son bord recourbé R1.
Toutefois, la paroi latérale du récipient pourrait avoir une autre forme car le dispositif de préhension 0 est adaptable à différentes formes et/ou tailles de récipients R que l'on souhaite serrer entre ses surfaces de serrage S1, S2.

Le récipient R est ici un ustensile de cuisson adapté à la cuisson d'aliments.

A cette fin, le fond et la paroi latérale du récipient R sont adaptés à supporter la chauffe d'une flame et à transmettre de la chaleur vers l'aliment.

Comme illustré sur les figures 1 à 10, le dispositif de préhension 0 d'un tel récipient R comporte :
- une poignée de préhension P1 ;
- un premier organe de serrage 1 monté coulissant par rapport à la poignée de préhension P1 entre des première et seconde positions de coulissement et présentant une première surface de serrage S1 ;
- un second organe de serrage 2 présentant une seconde surface de serrage S2 en vis-à-vis de la première surface de serrage S1 pour former une pince de serrage de récipient R entre les première et seconde surfaces de serrage S1, S2 ;
- un levier d'actionnement 8 monté pivotant par rapport à la poignée de préhension P1 entre une position de serrage et une position de libération.

Dans la position de serrage (voir par exemple les figures 1, 6a et 8), le levier 8 est rapproché de la poignée de préhension P1. En l'occurrence, dans la position de serrage, le levier 8 est au moins partiellement escamoté dans un passage Pn formé dans le corps de la poignée de préhension P1.

Ce passage Pn s'étend longitudinalement selon un axe longitudinal de la poignée P1 et il débouche latéralement sur une face inférieure de la poignée de préhension P1.

Dans la position de libération (voir par exemple les figures 2, 6b et 9), le levier 8 est plus éloigné de la poignée P1 qu'il ne l'est lorsqu'il est dans la position de serrage.

Lorsque le levier 8 est en position de libération, une partie du levier 8 qui est escamotée dans le passage Pn lorsque le levier est en position de serrage, se trouve alors à l'extérieur de la poignée P1.

Le dispositif de préhension 0 selon l'invention comporte aussi un mécanisme de liaison agencé de sorte que le déplacement du levier d'actionnement 8 de la position de libération vers la position de serrage entraîne le déplacement du premier organe de serrage 1 de sa première position vers sa seconde position et le rapprochement de la première surface de serrage S1 par rapport à la seconde surface de serrage S2.

Les première et seconde surfaces de serrage S1, S2, forment les mors d'une pince entre lesquels peut être introduit une paroi périphérique de récipient R pour y être serré entre ces surfaces S1, S2 lorsque le levier 8 est en position de serrage (le premier organe de serrage 1 est alors placé dans sa deuxième position comme illustré sur les figures 1, 1a, 6a, 8).

Le dispositif de préhension 0 comporte aussi :
- un organe élastique de rappel 7 disposé pour exercer un effort élastique de rappel du premier organe de serrage 1 de la seconde position vers la première position ; et
- un mécanisme de verrouillage comportant un poussoir 5 mobile par rapport à la poignée de préhension P1 entre une position de verrouillage et une position de déverrouillage.

Ce mécanisme de verrouillage est :
- d'une part agencé pour que lorsque le poussoir 5 est placé en position de verrouillage, le mécanisme de verrouillage interdit le déplacement du levier d'actionnement 8 placé en position de serrage vers la position de libération ; et

- d'autre part agencé pour que lorsque le poussoir 5 est placé en position de déverrouillage, le mécanisme de verrouillage autorise le déplacement du levier d'actionnement 8 placé en position de serrage vers la position de libération.

Dans les premier et second modes de réalisation de l'invention, le mécanisme de verrouillage comporte un ergot 91 et une butée complémentaire 92.

Le levier d'actionnement 8 est maintenu en position de serrage lorsque l'ergot 91 est en appui contre la butée complémentaire 92 et il est libre de passer de sa position de serrage vers sa position de libération lorsque l'ergot 91 est éloigné de la butée complémentaire 92.

Le poussoir 5 est agencé pour que le déplacement du poussoir 5 de la position de verrouillage vers la position de déverrouillage commande l'éloignement de l'ergot 91 vis-à-vis de la butée complémentaire 92 pour autoriser le déplacement du levier d'actionnement 8 de sa position de serrage vers sa position de libération.

Dans le premier mode de réalisation de l'invention illustré sur les figures 1 à 6b, l'ergot 91 est formé sur l'un parmi le poussoir 5 et le levier d'actionnement 8 alors que la butée complémentaire 92 est formée sur l'autre parmi le poussoir 5 et le levier d'actionnement 8.

Ce mode de réalisation correspond au premier mode de réalisation illustré aux figures 1 à 6b où l'ergot 91 est formé sur le poussoir 5 et où la butée complémentaire 92 est formée sur le levier d'actionnement 8**.**

En l'occurrence la butée complémentaire 92 est ici formée par une surface d'un évidement pratiqué dans le levier 8, au niveau d'une extrémité terminale du levier 8 qui est distale du point de pivotement 9 du levier par rapport à la poignée de préhension P1.

L'ergot 91 formé sur le poussoir 5 passe au travers d'un évidement avant 10a de la tige 10 du premier organe de serrage 1 pour permettre à la tige de coulisser par rapport à la poignée sans déplacer le poussoir 5.

Ce premier mode de réalisation est avantageux car il permet d'avoir une accroche directe entre le levier d'actionnement 8 et poussoir 5 sans nécessiter de passer par une autre pièce intermédiaire.

La fonction de verrouillage sélectif du levier par déplacement du poussoir vers la position de déverrouillage est ainsi simplement réalisée.

Le déplacement du levier vers la position de libération est autorisé lorsque l'ergot 91 n'est plus en appui contre la butée complémentaire 92 et est interdit lorsqu'ils sont en contact l'un contre l'autre.

Selon le second mode de réalisation alternatif illustré aux figures 8 et 9, l'ergot 91 est formé sur l'un parmi la poignée de préhension P1 et le levier d'actionnement 8, la butée complémentaire 92 étant formée sur l'autre parmi la poignée de préhension P1 et le levier d'actionnement 8.

Ce mode de réalisation correspond au deuxième mode de réalisation illustré aux figures 8, 9 et 10 où l'ergot 91 est formé sur une languette élastique appartenant au levier 8 et où la butée complémentaire 92 est formée sur la poignée de préhension P1.

En l'occurrence, la butée complémentaire 92 est ici formée par une surface d'un évidement pratiqué dans la poignée de préhension P1, dans un passage où coulisse la tige 10 par rapport à la poignée P1.

Ce passage où est formé la butée complémentaire 92 se trouve dans une zone interne de la poignée P1 qui est distale du point de pivotement 9 du levier 8 par rapport à la poignée de préhension P1 et qui est proximale des surfaces de serrage.

Ainsi les efforts appliqués entre l'ergot 91 et la butée complémentaire 92 pour maintenir le serrage du récipient sont minimisés par effet de levier (l'ergot 91 étant à l'extrémité terminale du levier 8). La durée de vie des surfaces en contact entre ergot 91 et la butée 92 s'en trouve améliorée.

Plus particulièrement l'ergot 91 est porté par une languette élastique L appartenant au levier d'actionnement 8, la languette L étant déformée élastiquement lors du passage du levier 8 vers sa position de serrage, la languette L retrouvant sa forme lorsque le levier 8 arrive en position de serrage et que le poussoir 5 est en position de verrouillage.

Comme on le comprend de la figure 8, lorsque le levier 8 est en position de serrage et que le poussoir 5 est en position de verrouillage, l'ergot 91 sous l'effet élastique de la languette élastique L vient en contact contre la butée complémentaire 92 pour bloquer le levier dans la position de serrage.

La languette L porte une extrémité terminale passant au travers d'un évidement 10a de la tige 10 du premier organe de serrage 1.

Comme illustré sur la figure 8, lorsque le levier 8 est en position de serrage et que le poussoir 5 est en position de verrouillage, l'extrémité terminale 80 de la languette L se trouve dans un passage interne 40 du poussoir 5 (la languette L passant au travers de l'évidement 10a de la tige 10).

Lors du déplacement du poussoir 5 de sa position de verrouillage vers sa position de déverrouillage, un bord du passage interne 40 du poussoir 5 vient en contact contre l'extrémité terminale 80 de la languette L pour la déformer élastiquement et ainsi forcer l'éloignement de l'ergot 91 vis-à-vis de la butée complémentaire 92.

Le levier 8 est alors libre de se déplacer de la position de serrage vers la position de libération sous l'effet de la poussée du moyen élastique de rappel 7 sur la contre-came 6.

Le passage interne 40 du poussoir 5 est ici formé sur une partie du poussoir 5 qui est en forme de plaque métallique 4 assemblée au reste du poussoir 5 par exemple à l'aide d'une vis.

Dans tous les modes de réalisation présentant un ergot 91 et une butée complémentaire 92, l'ergot et la butée 92 sont préférentiellement cachés par le levier 8 pour être inaccessible depuis l'extérieur du dispositif 0. Ainsi, le verrouillage est sécurisé puisqu'il ne peut être commandé que par déplacement du poussoir 5.

L'ergot 91 et/ou la butée 92 sont chanfreinés pour faciliter le déplacement relatif de l'ergot 91 par rapport à la butée complémentaire 92 lors du passage du levier vers sa position de serrage.

Un ressort de rappel élastique 3 est disposé pour exercer, sur le poussoir 5, un effort élastique de rappel du poussoir 5 de la position de déverrouillage vers la position de verrouillage.

Ce ressort de rappel élastique 3 présente deux extrémités axiales, l'une de ces extrémités est positionnée dans un passage du poussoir 5 où le ressort est calé latéralement.

L'autre de ces extrémités est en appui contre un plot de centrale appartenant à la poignée P1, ce plot de centrage permettant un calage latéral de cette autre extrémité du ressort de rappel élastique 3.

Le ressort de rappel élastique 3 est ici un ressort hélicoïdal de compression.

Le poussoir 5 est ici coulissant par rapport à la poignée P1 entre sa position de déverrouillage et sa position de verrouillage suivant une direction parallèle à la direction de coulissement du premier organe de serrage 1 par rapport à la poignée P1.

Ce ressort de rappel élastique 3 est avantageux car il permet de sécuriser le levier d'actionnement 8 dans sa position de serrage pour maintenir le serrage du récipient R entre les première et seconde surfaces de serrage S1, S2.

Ainsi, sous l'effet de l'effort élastique de rappel exercé par le ressort 3 sur le poussoir 5, le poussoir est maintenu fermement dans sa position de verrouillage.

Le récipient R est alors fermement maintenu sous l'effet du couple de serrage transmis du levier 8 vers le premier organe de serrage 1.

Pour libérer le récipient R, l'utilisateur doit appliquer une force sur le poussoir 5 qui est suffisante pour déformer le ressort de rappel élastique 3 et forcer le déplacement du poussoir 5 de sa position de verrouillage vers sa position de déverrouillage.

De ce fait, le déverrouillage du levier 8 ne peut pas être accidentel puisqu'il nécessite un effort de l'utilisateur spécifiquement appliqué sur le poussoir 5 suivant une direction prédéfinie.

Comme illustré sur les figures 1 à 10, le poussoir 5 est accessible depuis une face supérieure de la poignée de préhension P1 alors que le levier d'actionnement 8 est accessible depuis une face inférieure de la poignée de préhension P1.

De ce fait, le déverrouillage du levier 8 est quasiment impossible tant que l'utilisateur utilise le dispositif 0 pour soulever un récipient R.

Le fait de soulever le récipient R avec le dispositif 0 en tenant la poignée à une main implique que l'utilisateur serre la poignée et par conséquent comprime le levier 8 contre la poignée P1.

Même si l'utilisateur portant le récipient avec le dispositif de préhension 0 forçait le déplacement du poussoir 5, le serrage qu'il exerce contre le levier et qui est nécessaire à une bonne préhension de la poignée P1 interdirait le déplacement du levier 8 vers sa position de libération.

Pour déverrouiller le levier, l'utilisateur doit d'abord poser le récipient R pour que sa main puisse relâcher des efforts appliqués sur la poignée et le levier et ainsi autoriser :
- d'une part le déplacement du poussoir 5 vers la position de déverrouillage ; et
- d'autre part limiter le couple appliqué sur le levier par les doigts de l'utilisateur autorisant son déplacement progressif vers la position de libération (sous l'effet de l'effort de rappel élastique exercé par l'organe élastique de rappel 7).

Le mécanisme de liaison comporte une came 8a portée par le levier d'actionnement 8 et en appui contre une contre-came 6.

Cette contre-came 6 est assujettie en déplacement à une tige 10 appartenant au premier organe de serrage 1 pour que la contre-came 6 coulisse avec le premier organe de serrage 1 par rapport à la poignée de préhension P1.

La tige 10 du premier organe de serrage 1 est montée coulissante suivant des glissières de guidage G formées sur la poignée P1, ces glissières s'étendant parallèlement à un axe longitudinal de la poignée P1.

Les glissières de guidage G du premier organe de serrage 1 sont ici formées dans le corps de la poignée P1, à l'intérieur d'un évidement traversant une partie avant du corps de poignée.

Cet évidement s'étend entre une extrémité de la poignée P1 qui est adjacente au second organe de serrage 2 et le passage Pn qui s'étend longitudinalement dans le corps de poignée P1 selon l'axe longitudinal de la poignée P1.

Comme on le voit sur les figures 1a et 2a et 8 et 9, les première et seconde surfaces de serrage S1, S2 sont en vis-à-vis l'une de l'autre pour former une pince permettant de sélectivement serrer une partie d'une paroi latérale périphérique d'un récipient R entre ces première et seconde surfaces de serrage S2, S2.

Le levier d'actionnement 8 est mécaniquement relié au premier organe de serrage 1 via la came 8a en appui contre la contre-came 6 pour déplacer ce premier organe de serrage 1 de la première position de coulissement vers la seconde position de coulissement par rapport à la poignée de préhension en fonction du pivotement du levier 8 de la position de libération vers la position de serrage.

Le premier organe de serrage 1 est en forme en L. La tige 10 forme une partie allongée de l'organe de serrage 1 et la surface de serrage S1 s'étend perpendiculairement à la tige pour venir en vis-à-vis de la seconde surface de serrage S2.

La seconde surface de serrage S2 du second organe de serrage 2 est formée à une extrémité terminale de la poignée 1 en vis-à-vis de la première surface de serrage S1.

En l'occurrence, dans les modes de réalisation décrits sur les figures 1 à 10, le second organe de serrage 2 fait partie intégrante de la poignée 1 et constitue une portion avant de la poignée P1, la seconde surface de serrage S2 étant formée sur la portion avant de la poignée P1 (au niveau de l'extrémité longitudinale de la poignée de préhension P1).

Toutefois, le second organe de serrage 2 pourrait être constitué par une pièce de serrage spécifique assemblée contre une extrémité terminale de la poignée P1, la poignée P1 et le second organe de serrage 2 étant alors constitués d'au moins deux pièces distinctes assemblées entre elles.

Les premier et second organes de serrage 1, 2 sont ici rigides pour limiter le risque de déformation de ces organes de serrage 1, 2 au moment du serrage de la paroi du récipient R.

Grâce à l'invention, le serrage de la paroi périphérique du récipient R est particulièrement efficace ce qui sécurise l'utilisateur.

Comme indiqué précédemment, une partie du levier 8 se trouve dans le passage Pn pour y être au moins partiellement escamoté lorsque le levier 8 est en position de serrage.

Le second organe de serrage 2 est fixe par rapport à la poignée P1 et il peut appartenir à la poignée P1 ou être constitué par une pièce spécifique qui est distincte de la pièce formant la poignée P1 et qui est fixement assemblée à la poignée P1.

Grâce à l'invention, le déplacement du premier organe de serrage 1 de la première position vers la seconde position est commandé, par l'intermédiaire de la came 8a qui est en appui glissant contre la contre-came 6 et qui est déplacée avec le levier 8 (la came 8a est assujettie au levier 8).

L'usage de came 8a et de contre-came 6 permet de simplement définir la relation de transformation du mouvement de pivotement du levier en mouvement de translation du premier organe de serrage 1.

De plus, la came 8a et la contre-came 6 permettent d'obtenir un rapport entre le couple appliqué par l'utilisateur sur le levier et l'effort de serrage appliqué par le premier organe de serrage sur la paroi du récipient.

Selon les profils de la came 8a et de la contre-came 6, ce rapport peut être constant ou évolutif en fonction de la position du levier 8 par rapport à la poignée.

Préférentiellement, les profils de came et de contre-came sont sélectionnés pour que la valeur du rapport soit croissante lors du déplacement du levier de sa position de libération vers sa position de serrage, cette valeur du rapport pouvant être strictement croissante.

En d'autres termes, lorsqu'un couple d'intensité donnée est appliqué sur le levier 8, on obtient :
- première force de serrage sur le premier organe de serrage lorsque le levier 8 est en position de serrage ; et
- une seconde force de serrage sur le premier organe de serrage lorsque le levier 8 est en position de libération, la première force de serrage étant supérieure à la seconde force de serrage.

Ceci permet d'obtenir un serrage de plus en plus efficace lorsque le premier organe de serrage est approché vers sa première position.

Les efforts exercés par l'utilisateur sont ainsi plus efficaces à mesure que le levier 8 approche de sa position de serrage ce qui est ergonomique et améliore la capacité de préhension du récipient R.

Le mécanisme de liaison est par ailleurs agencé de sorte que le déplacement du premier organe de serrage 1 de sa seconde position vers sa première position entraîne le déplacement du levier d'actionnement 8 de la position de serrage vers la position de libération.

Ainsi, l'effort élastique de rappel exercé par le ressort 7 sur la contre-came 6 permet d'une part de forcer le déplacement du premier organe de serrage 1 de sa seconde position de coulissement vers sa première position de coulissement et permet d'autre part de forcer le déplacement du levier d'actionnement 8 de sa position de serrage vers sa position de libération (le déplacement de la contre-came 6 a pour effet de forcer le déplacement de la came 8a assujettie au levier 8).

Plus particulièrement, la came 8a et la contre-came 6 sont agencées pour que le déplacement du premier organe de serrage 1 de sa seconde position vers sa première position entraîne le déplacement du levier d'actionnement 8 de sa position de serrage vers sa position de libération.

La contre-came 6 est assujettie en coulissement avec le premier organe de serrage 1.

Ainsi, lorsque le premier organe de serrage 1 se déplace de la seconde position vers la première position, sous l'effet de l'effort élastique de rappel exercé par l'organe élastique de rappel 7, la contre-came 6 coulisse avec le premier organe de serrage 1 et génère une force sur la came 8a qui tend à déplacer le levier d'actionnement 8 de sa position de serrage vers sa position de libération.

La came 8a qui est assujettie au levier 8 se déplace avec le levier 8.

Dans le cas présent, pour simplifier la fabrication du dispositif de préhension 0 selon l'invention, la came 8 est directement formée sur une face latérale du levier 8 qui est orientée vers le passage Pn de la poignée.

Le levier 8 et la came 8a forment ainsi une seule et même pièce.

Préférentiellement, cette pièce formant le levier 8 et la came 8a est une pièce moulée, préférentiellement moulée par injection.

Afin d'assujettir la contre-came 6 et l'organe de serrage 1 en coulissement par rapport à la poignée P1, comme illustré sur la figure 7 et sur les figures 1, 2, 8 et 9, la contre-came 6 est disposée dans un évidement 10b pratiqué dans la tige 10 du premier organe 1, cette contre-came 6 étant coincée entre des butées axiales appartenant à la tige 10 pour s'opposer à tout mouvement de la contre-came 6 par rapport à la tige 10 selon un axe longitudinal de la tige 10.

Le premier organe de serrage 1 est coulissant par rapport à la poignée de préhension P1 selon cet axe longitudinal de la tige 10 qui s'étend suivant une direction longitudinale de la poignée de préhension P1.

Lors du pivotement du levier 8 entre les positions de libération et de serrage du levier, la came 8a pivote par rapport à la poignée P1 autour du pivot 9, alors que la contre-came 6 qui est assujettie à la tige 10 du premier organe de serrage 1 se translate par rapport à la poignée de préhension P1, la came 8a glissant contre la contre-came 6.

L'usage de l'organe élastique de rappel 7 permet de supprimer les jeux entre came et contre-came puisque l'effort élastique de rappel appliqué sur le premier organe de serrage 1 génère un effort de compression de la contre-came contre la came.

La suppression des jeux entre came et contre-came améliore le confort d'usage du dispositif de préhension qui réagit de manière progressive et sans à coup aux efforts de serrage appliqués par l'utilisateur.

Comme l'organe élastique de rappel 7 est en contact contre la contre-came 6, l'effort élastique de rappel du premier organe de serrage 1 de la seconde position vers la première position est transmis par l'intermédiaire de la contre-came 6, cette même contre-came 6 forçant ainsi le déplacement de la came 8a et du levier 8.

Afin de limiter le coulissement axial du premier organe de serrage 1 par rapport à la poignée P1, la poignée P1 comporte une butée axiale interne P3 formée à l'intérieur du passage Pn sur laquelle appuie la contre-came 6 alors que le premier organe de serrage 1 est en première position.

De manière similaire, une portion P1x de la première poignée de préhension P1 et une portion 8x du levier d'actionnement 8 sont conformées :
- pour buter l'une contre l'autre lorsque le levier d'actionnement 8 est dans la position de libération ; et
- pour être éloignées l'une de l'autre lorsque le levier d'actionnement 8 est dans la position serrage, cette portion P1x de la première poignée de préhension P1 et la portion 8x du levier d'actionnement 8 définissant ensemble la position de libération du levier d'actionnement 8 par rapport à la poignée de préhension P1.

Ce mode de réalisation est avantageux car il permet, de manière simple, de limiter la course du levier 8 par rapport à la poignée P1 et cela sans avoir à fabriquer une pièce spécifique pour définir cette butée en rotation.

Comme on le comprend des figures 1 à 10, le levier d'actionnement 8 est monté pivotant par rapport à la poignée de préhension P1 par l'intermédiaire d'un pivot 9 disposé sur une portion arrière du dispositif de préhension 0, les première et seconde surfaces de serrage S1, S2 des premier et second organes de serrage 1, 2 étant disposés sur une portion avant du dispositif de préhension 0.

Les portions avant et arrière du dispositif 0 sont de part et d'autre du dispositif et le poussoir de verrouillage 5 se trouve à plus grande proximité de la portion avant qu'il ne l'est de la portion arrière.

Avec ce positionnement du pivot 9 au niveau de la portion arrière du dispositif de préhension 0, l'amplitude de déplacement du levier 8 par rapport à la poignée de préhension P1 est maximale du côté de la portion avant du dispositif de préhension 0 (c'est-à-dire du côté du dispositif de préhension qui est proximal par rapport aux surfaces de serrage) et est minimale du côté de la portion arrière du dispositif de préhension (c'est-à-dire du côté du dispositif de préhension qui est distal par rapport aux surfaces de serrage).

Il en résulte une meilleure ergonomie pour l'utilisateur puisqu'il peut exercer un effort de serrage plus efficace sur le levier.

En effet, lors de l'utilisation du dispositif de préhension, le pouce, l'index et le majeur de la main de l'utilisateur se trouvent placés du côté de la portion avant du dispositif de préhension alors que l'auriculaire et l'annulaire de la main de l'utilisateur se trouvent placés du côté de la portion arrière du dispositif de préhension.

Les doigts les plus puissants de l'utilisateur sont ainsi utilisés pour exercer l'effort de serrage sur le levier 8, du côté où l'amplitude de déplacement du levier est maximale.

Il en résulte une meilleure prise en main et une plus grande capacité de serrage du levier.

La localisation de l'effort de serrage exercé par l'utilisateur au niveau de la portion avant du dispositif, là où est porté le récipient R, permet aussi de mieux tenir ce récipient R.

Plus précisément, le levier 8 est monté en chape dans le passage Pn formé dans le corps de la poignée de préhension, le pivot 9 étant fixé dans au moins une perforation de la poignée de préhension P1 et ayant une portion centrale s'étendant dans le passage Pn en passant à l'intérieur d'une perforation formée dans le levier 8.

De cette manière, le levier 8 qui est au moins en partie dans le passage Pn peut pivoter autour du pivot 9 par rapport à la poignée P1 tout en étant maintenu dans le passage Pn par des bords latéraux de la poignée placés de part et d'autre des bords latéraux du levier 8.

La poignée P1 s'étend longitudinalement selon l'axe longitudinal de la poignée alors que le pivot 9 s'étend longitudinalement selon un axe longitudinal du pivot 9.

L'axe longitudinal du pivot 9 est dans un plan perpendiculaire à l'axe longitudinal de la poignée de préhension.

Préférentiellement, comme on le voit en comparant les figure 1 et 2 ou en comparant les figures 8 et 9, la surface de contact entre la came 8a et la contre-came 6 est minimale lorsque le levier 8 est en position de libération et est maximale lorsque le levier 8 est en position de serrage.

Cette caractéristique permet de réduire l'usure de la came 8a et de la contre-came 6 car la surface de contact augmente avec l'effort transmis via la contre-came 6.

Ce mode de réalisation est simplement obtenu car la came 8a et le levier 8 forment un seul ensemble rigide ici obtenu par une seule pièce rigide comprenant la came et le levier.

Les organes de serrage 1, 2 sont adaptés à supporter des températures supérieures à 120°C qui peuvent être atteintes lorsque la paroi périphérique du récipient est serrée et que le récipient R est chauffé.

A cette fin, le premier organe de serrage 1 est préférentiellement en métal, préférentiellement en acier inoxydable et le second organe de serrage 2 peut être en un matériau polymère rigide résistant à au moins 120°C (par exemple de la bakélite).

Comme on le comprend des figures 1, 2, 3, 6a, 6b, 8 et 9, l'organe élastique de rappel 7 est un ressort 7 d'une part en appui contre une surface d'appui P2 appartenant à la poignée de préhension P1 et d'autre part en appui contre une surface d'appui appartenant à la contre-came 6. La surface d'appui P2 est formée dans le passage Pn de la poignée P1.

L'organe élastique de rappel 7 est disposé pour s'opposer élastiquement au passage du premier organe de serrage 1 de la première position vers la seconde position.

Préférentiellement, comme illustré sur les figures 1, 2, 6a, 6b, 8 et 9, la tige 10 présente un évidement interne 10b dans lequel s'étend une portion au moins dudit organe élastique de rappel 7.

Ceci permet de compacter le mécanise dans la poignée en approchant le ressort de l'axe longitudinal de la tige 10.

Comme illustré aux figures 2, 6b et 9, un bord axial 10b1 de l'évidement interne 10b de la tige 10 est en butée axiale contre l'organe élastique de rappel 7 lorsque le premier organe de serrage 1 se trouve dans sa première position de coulissement.

Comme illustré aux figures 1, 6a et 8, ce bord axial 10b1 de l'évidement interne 10b de la tige 10 est éloigné de l'organe élastique de rappel 7 lorsque le premier organe de serrage 1 se trouve dans sa seconde position de coulissement.

Ainsi, l'organe élastique de rappel 7, en plus de sa fonction de rappel élastique du premier organe vers la première position, forme une butée axiale définissant une limite de coulissement du premier organe de serrage 1 lorsqu'il arrive dans sa première position par rapport à la poignée de préhension P1.

Ce mode de réalisation simplifie la fabrication du dispositif de préhension selon l'invention puisqu'il n'est pas nécessaire de fabriquer une butée spécifique pour limiter le coulissement du premier organe de serrage.

La fabrication et le montage du dispositif de préhension 0 selon l'invention sont ainsi facilités et économiques à mettre en œuvre.

Par ailleurs, le ressort 7 est, d'un côté en appui axial contre une surface interne au corps de la poignée P1 et d'un autre côté en appui axial contre une surface arrière de la contre-came 6 pour pousser la contre-came 6 et ainsi forcer le contact entre la came 8a et la contre-came 6.

Comme on le voit sur la figure 10 ou sur la figure 7, la contre-came 6 présente des bords avant et arrière qui sont chacun en appui axial contre des surfaces formées dans l'évidement interne 10b de la tige 10 de manière que la contre-came 6 et le premier organe de serrage 1 soient assujettis en translation lors du coulissement de l'organe de serrage 1 par rapport à la poignée P1.

On voit aussi que la contre-came 6 présente une paire d'ailettes latérales 6a, formées de chaque côté de la contre-came 6 pour venir en appui contre une surface de glissement formée dans le corps de la poignée P1.

Lors du coulissement du premier organe de serrage 1, ces ailettes 6a glissent contre les surfaces de glissement formées dans le corps de la poignée est supportent un effort de poussée transversal exercé contre la contre-came 6 par la came 8a.

Ces ailettes latérales 6a permettent d'améliorer le glissement de la contre-came 6 contre la poignée P1.

Par ailleurs, chaque ailette 6a est disposée entre la tige 10 et la surface de glissement formée dans le corps de la poignée P1 pour guider le coulissement de la tige 10.

La poignée P1 présente également un plot de guidage P10 formé dans le passage Pn où pivote / s'escamote le levier 8.

Ce plot de guidage P10 est disposé en travers du passage Pn pour guider, dans le passage Pn, le coulissement d'une partie arrière de la tige 10 par rapport au corps de poignée P1. Ce plot de guidage P10 est parallèle au pivot 9.

Ainsi, la tige 10 est latéralement guidée, d'un côté par les ailettes 6a portées par la contre-came et d'un autre côté par le plot de guidage P10.

Le démontage de la tige 10 est ainsi possible en retirant le pivot 9 pour démonter le levier 8 et la came 8a, puis en coulissant le premier organe de serrage 1 au-delà de sa première position pour éloigner la tige 10 vis-à-vis du plot de guidage 10 et ainsi permettre le pivotement de la tige dans le passage Pn.

Ce pivotement permet de désassembler la contre-came 6 vis-à-vis de la tige 10.

Le démontage du poussoir 5 se fait en démontant l'assemblage de la plaque 4 vis-à-vis du reste du poussoir 5 (ici la plaque 4 est reliée au reste du poussoir 5 par une unique vis).

Cette plaque 4 qui est en appui contre une surface de glissement formée dans le passage Pn du corps de la poignée P1 forme, lorsqu'elle est assemblée avec le reste du poussoir 5, un montage en sandwich autorisant uniquement le déplacement du poussoir 5 entre ses positions verrouillée et déverrouillée.

Le démontage de la plaque 4 par rapport au reste du poussoir 5 permet de désassembler le poussoir 5 vis-à-vis de la poignée P1.

Une fois le poussoir désassemblé, plus rien ne s'oppose à l'extraction complète de la tige 10 hors de la poignée P1.

Le montage du dispositif 0 selon l'invention se fait en suivant les mêmes étapes que pour le démontage mais dans la chronologie inverse.

Enfin, comme illustré sur les figures 1 à 10, une pièce pare-feu 30 portée et fixée sur la poignée de préhension P1. Cette pièce pare-feu 30 recouvre une surface latérale inférieure de la poignée de préhension P1, la pièce pare-feu 30 étant adjacente de la seconde surface de serrage S2 et étant métallique.

La pièce pare-feu 30 forme une protection évitant un contact direct entre la flame de chauffe du récipient et la poignée de préhension P1.

En résumé, le dispositif de préhension 0 du récipient R est agencé pour sélectivement serrer une partie de la paroi latérale périphérique du récipient R de manière ce que l'utilisateur puisse :
- soit porter le récipient R à l'aide du dispositif de préhension 0 (lorsque le levier 8 est en position de serrage et que les surfaces de serrage S1, S2 serrent la paroi périphérique du récipient R) ;

- soit libérer le récipient R vis-à-vis du dispositif de préhension en déplaçant le levier 8 de sa position de serrage vers sa position de libération pour écarter les surfaces de serrage S1, S2 l'une de l'autre et permettre de dégager le récipient R de l'espace défini entre les surfaces de serrage ainsi écartées.

Le dispositif de préhension 0 est ainsi amovible du récipient R ce qui permet de l'adapter à différents récipients.

Grâce au dispositif 0 selon l'invention, les récipients R à soulever peuvent être dépourvus de poignées, le dispositif de préhension selon l'invention étant adaptable à une pluralité de récipients à soulever.

De tels récipients qui ne comportent pas de poignée propre sont ainsi plus économiques à fabriquer, faciles à ranger et résistants puisqu'il n'y a pas de risque de rupture d'assemblage récipient / poignée.

## Revendications

1. Dispositif de préhension (0) de récipient (R) comportant :
- une poignée de préhension (P1) ;
- un premier organe de serrage (1) monté coulissant par rapport à la poignée de préhension (P1) entre des première et seconde positions de coulissement et présentant une première surface de serrage (S1) ;
- un second organe de serrage (2) présentant une seconde surface de serrage (S2) en vis-à-vis de la première surface de serrage (S1) pour former une pince de serrage de récipient (R) entre les première et seconde surfaces de serrage (S1, S2) ;
- un levier d'actionnement (8) monté pivotant par rapport à la poignée de préhension (P1) entre une position de serrage et une position de libération, le dispositif de préhension (0) comportant un mécanisme de liaison agencé de sorte que le déplacement du levier d'actionnement (8) de la position de libération vers la position de serrage entraîne le déplacement du premier organe de serrage (1) de sa première position vers sa seconde position et le rapprochement de la première surface de serrage (S1) par rapport à la seconde surface de serrage (S2), le dispositif de préhension (0) comportant en outre :
- un organe élastique de rappel (7) disposé pour exercer un effort élastique de rappel du premier organe de serrage (1) de la seconde position vers la première position ; et
- un mécanisme de verrouillage comportant un poussoir (5) mobile par rapport à la poignée de préhension (P1) entre une position de verrouillage et une position de déverrouillage, ledit mécanisme de verrouillage étant :
- d'une part agencé pour que lorsque le poussoir (5) est placé en position de verrouillage, le mécanisme de verrouillage interdit le déplacement du levier d'actionnement (8) placé en position de serrage vers la position de libération ; et
- d'autre part agencé pour que lorsque le poussoir (5) est placé en position de déverrouillage, le mécanisme de verrouillage autorise le déplacement du levier d'actionnement (8) placé en position de serrage vers la position de libération ; et en ce que le mécanisme de liaison comporte une came (8a) portée par le levier d'actionnement (8) et en appui contre une contre-came (6) assujettie en déplacement à une tige (10) appartenant au premier organe de serrage (1) pour que la contre-came (6) coulisse avec le premier organe de serrage (1) par rapport à la poignée de préhension (P1), **caractérisé en ce que** la contre-came (6) est disposée dans un évidement pratiqué dans la tige (10) et est coincée entre des butées axiales appartenant à la tige (10) pour s'opposer à tout mouvement de la contre-came (6) par rapport à la tige (10) selon un axe longitudinal de la tige (10).

2. Dispositif de préhension (0) de récipient (R) selon la revendication 1, dans lequel le mécanisme de verrouillage comporte un ergot (91) et une butée complémentaire (92), le levier d'actionnement (8) étant maintenu en position de serrage lorsque l'ergot (91) est en appui contre la butée complémentaire (92) et étant libre de passer de sa position de serrage vers sa position de libération lorsque l'ergot (91) est éloigné de la butée complémentaire (92), le poussoir (5) étant agencé pour que le déplacement du poussoir (5) de la position de verrouillage vers la position de déverrouillage commande l'éloignement de l'ergot (91) vis-à-vis de la butée complémentaire (92) pour autoriser le déplacement du levier d'actionnement (8) de sa position de serrage vers sa position de libération.

3. Dispositif de préhension (0) de récipient (R) selon la revendication 2, dans lequel l'ergot (91) est formé sur l'un parmi le poussoir (5) et le levier d'actionnement (8), la butée complémentaire (92) étant formée sur l'autre parmi le poussoir (5) et le levier d'actionnement (8).

4. Dispositif de préhension (0) de récipient (R) selon la revendication 2, dans lequel l'ergot (91) est formé sur l'un parmi la poignée de préhension (P1) et le levier d'actionnement (8), la butée complémentaire étant formée sur l'autre parmi la poignée de préhension (P1) et le levier d'actionnement (8).

5. Dispositif de préhension (0) de récipient (R) selon l'une quelconque des revendications 2 à 4, comportant en outre un ressort de rappel élastique (3) disposé pour exercer un effort élastique de rappel du poussoir (5) de la position de déverrouillage vers la position de verrouillage.

6. Dispositif de préhension (0) de récipient (R) selon l'une quelconque des revendications 1 à 5, dans lequel la tige (10) présente un évidement interne (10b) dans lequel s'étend une portion au moins dudit organe élastique de rappel (7), un bord axial (10b1) de l'évidement interne de la tige (10) étant en butée axiale contre l'organe élastique de rappel (7) lorsque le premier organe de serrage (1) se trouve dans sa première position de coulissement et ledit bord axial (10b1) de l'évidement interne (10b) de la tige (10) étant éloigné de l'organe élastique de rappel (7) lorsque le premier organe de serrage (1) se trouve dans sa seconde position de coulissement.

7. Dispositif de préhension (0) de récipient (R) selon l'une quelconque des revendications 1 à 6, dans lequel une portion (P1x) de la première poignée de préhension (P1) et une portion (8x) du levier d'actionnement (8) sont conformées pour buter l'une contre l'autre lorsque le levier d'actionnement (8) est dans la position de libération et pour être éloignées l'une de l'autre lorsque le levier d'actionnement (8) est dans la position serrage, la portion (P1x) de la première poignée de préhension (P1) et la portion (8x) du levier d'actionnement (8) définissant ensemble la position de libération du levier d'actionnement (8) par rapport à la poignée de préhension (P1).

8. Dispositif de préhension (0) de récipient (R) selon l'une quelconque des revendications 1 à 7, dans lequel la came (8a) et la contre-came (6) sont agencées pour que le déplacement du premier organe de serrage (1) de sa seconde position vers sa première position entraîne le déplacement du levier d'actionnement (8) de sa position de serrage vers sa position de libération.

9. Dispositif de préhension (0) de récipient (R) selon l'une quelconque des revendications 1 à 8, dans lequel l'organe élastique de rappel (7) est un ressort d'une part en appui contre une surface d'appui (P2) appartenant à la poignée de préhension (P1) et d'autre part en appui contre une surface d'appui appartenant à la contre-came (6).

10. Dispositif de préhension (0) de récipient (R) selon l'une quelconque des revendications 1 à 9, dans lequel le mécanisme de liaison est agencé de sorte que le déplacement du premier organe de serrage (1) de sa seconde position vers sa première position entraîne le déplacement du levier d'actionnement (8) de la position de serrage vers la position de libération.

11. Dispositif de préhension (0) de récipient (R) selon l'une quelconque des revendications 1 à 10, dans lequel le levier d'actionnement (8) est monté pivotant par rapport à la poignée de préhension (P1) par l'intermédiaire d'un pivot (9) disposé sur une portion arrière du dispositif de préhension (0), les première et seconde surfaces de serrage (S1, S2) des premier et second organes de serrage (1, 2) étant disposés sur une portion avant du dispositif de préhension (0).

12. Dispositif de préhension (0) de récipient (R) selon l'une quelconque des revendications 1 à 11, dans lequel une pièce pare-feu (30) portée par la poignée de préhension (P1) recouvre une surface latérale inférieure de la poignée de préhension (P1), la pièce pare-feu (30) étant adjacente de la seconde surface de serrage (S2) et étant métallique.

## Patentansprüche

1. Greifvorrichtung (0) zum Greifen eines Behälters (R), enthaltend:
- einen Greifgriff (P1);
- ein erstes Klemmorgan (1), das in Bezug auf den Greifgriff (P1) zwischen einer ersten und einer zweiten Verschiebestellung gleitverschieblich angebracht ist und eine erste Klemmfläche aufweist (S1);
- ein zweites Klemmorgan (2), das eine sich der ersten Klemmfläche (S1) gegenüberliegend erstreckende, zweite Klemmfläche (S2) aufweist, sodass eine Behälter-Klemmzange zum Einklemmen eines Behälters (R) zwischen der ersten und der zweiten Klemmfläche (S1, S2) gebildet wird;
- einen Betätigungshebel (8), der in Bezug auf den Greifgriff (P1) zwischen einer Klemmstellung und einer Freigabestellung verschwenkbar angebracht ist, wobei die Greifvorrichtung (0) einen Verbindungsmechanismus umfasst, der derart ausgelegt ist, dass die Verfahrbewegung des Betätigungshebels (8) von der Freigabestellung in die Klemmstellung bewirkt, dass das erste Klemmorgan (1) von seiner ersten Stellung in seine zweite Stellung bewegt wird und die erste Klemmfläche (S1) an die zweite Klemmfläche (S2) angenähert wird, wobei die Greifvorrichtung (0) ferner enthält:
- ein elastisches Rückstellorgan (7), das derart angeordnet ist, dass es eine elastische Rückstellkraft ausübt, die das erste Klemmorgan (1) von der zweiten Stellung in die erste Stellung zurückstellt; und
- einen Verriegelungsmechanismus, enthaltend einen Druckknopf (5), der in Bezug auf den Greifgriff (P1) zwischen einer Verriegelungsstellung und einer Entriegelungsstellung beweglich ist, wobei der Verriegelungsmechanismus derart ausgelegt ist, dass:
- der Verriegelungsmechanismus in der Verriegelungsstellung des Druckknopfs (5) einerseits den in der Klemmstellung befindlichen Betätigungshebel (8) daran hindert, sich in die Freigabestellung zu bewegen; und
- der Verriegelungsmechanismus in der Entriegelungsstellung des Druckknopfs (5) andererseits dem in der Klemmstellung befindlichen Betätigungshebel (8) erlaubt, sich in die Freigabestellung zu bewegen; und dass der Verbindungsmechanismus einen von dem Betätigungshebel (8) getragenen Nocken (8a) enthält, der an einem Nockenfolger (6) anliegt, welcher gemeinsam mit einer zu dem ersten Klemmorgans (1) gehörigen Stange (10) mitbewegt wird, damit der Nockenfolger (6) gemeinsam mit dem ersten Klemmorgan (1) relativ zu dem Greifgriff (P1) mitverschoben wird, **dadurch gekennzeichnet, dass** der Nockenfolger (6) in einer in der Stange (10) ausgebildeten Ausnehmung angeordnet ist und zwischen zu der Stange (10) gehörigen, axialen Anschlägen eingeklemmt ist, um keinerlei Verfahrbewegung des Nockenfolgers (6) relativ zu der Stange (10) entlang einer Längsachse der Stange (10) zuzulassen.

2. Greifvorrichtung (0) zum Greifen eines Behälters (R) nach Anspruch 1, wobei der Verriegelungsmechanismus eine Rastnase (91) und einen Gegenanschlag (92) enthält, wobei der Betätigungshebel (8) in der Klemmstellung gehalten wird, wenn die Rastnase (91) an dem Gegenanschlag (92) anliegt, und sich frei von seiner Klemmstellung in seine Freigabestellung bewegen kann, wenn die Rastnase (91) von dem Gegenanschlag (92) wegbewegt wird, wobei der Druckknopf (5) derart ausgelegt ist, dass die Verfahrbewegung des Druckknopfs (5) aus der Verriegelungsstellung in die Entriegelungsstellung dazu führt, dass die Rastnase (91) von dem Gegenanschlag (92) wegbewegt wird, um die Verfahrbewegung des Betätigungshebels (8) aus seiner Klemmstellung in seine Freigabestellung zu erlauben.

3. Greifvorrichtung (0) zum Greifen eines Behälters (R) nach Anspruch 2, wobei die Rastnase (91) auf dem Druckknopf (5) bzw. dem Betätigungshebel (8) ausgebildet ist, wobei der Gegenanschlag (92) auf dem jeweils anderen Element, dem Betätigungshebel (8) bzw. dem Druckknopf (5), ausgebildet ist.

4. Greifvorrichtung (0) zum Greifen eines Behälters (R) nach Anspruch 2, wobei die Rastnase (91) auf dem Greifgriff (P1) bzw. dem Betätigungshebel (8) ausgebildet ist, wobei der Gegenanschlag auf dem jeweils anderen Element, dem Betätigungshebel (8) bzw. dem Greifgriff (P1), ausgebildet ist.

5. Greifvorrichtung (0) zum Greifen eines Behälters (R) nach einem der Ansprüche 2 bis 4, ferner enthaltend eine elastische Rückstellfeder (3), die derart angeordnet ist, dass sie eine elastische Rückstellkraft ausübt, um den Druckknopf (5) aus der Entriegelungsstellung in die Verriegelungsstellung zurückzustellen.

6. Greifvorrichtung (0) zum Greifen eines Behälters (R) nach einem der Ansprüche 1 bis 5, wobei die Stange (10) eine innere Ausnehmung (10b) aufweist, in welcher sich zumindest ein Teilabschnitt des elastischen Rückstellorgans (7) erstreckt, wobei ein axialer Rand (10b1) der inneren Ausnehmung der Stange (10) axial an dem elastischen Rückstellorgan (7) anliegt, wenn sich das erste Klemmorgan (1) in seiner ersten Verschiebestellung befindet, und wobei der axiale Rand (10b1) der inneren Ausnehmung (10b) der Stange (10) von dem elastischen Rückstellorgan (7) entfernt ist, wenn sich das erste Klemmorgan (1) in seiner zweiten Verschiebestellung befindet.

7. Greifvorrichtung (0) zum Greifen eines Behälters (R) nach einem der Ansprüche 1 bis 6, wobei ein Teilabschnitt (P1x) des ersten Greifgriffs (P1) und ein Teilabschnitt (8x) des Betätigungshebels (8) derart ausgebildet sind, dass sie aneinander anstoßen, wenn sich der Betätigungshebel (8) in der Freigabestellung befindet, und dass sie voneinander entfernt sind, wenn sich der Betätigungshebel (8) in der Klemmstellung befindet, wobei der Teilabschnitt (P1x) des ersten Greifgriffs (P1) und der Teilabschnitt (8x) des Betätigungshebels (8) gemeinsam die Freigabestellung des Betätigungshebels (8) in Bezug auf den Greifgriff (P1) definieren.

8. Greifvorrichtung (0) zum Greifen eines Behälters (R) nach einem der Ansprüche 1 bis 7, wobei der Nocken (8a) und der Nockenfolger (6) derart ausgelegt sind, dass die Verfahrbewegung des ersten Klemmorgans (1) von seiner zweiten Stellung in seine erste Stellung bewirkt, dass der Betätigungshebel (8) von seiner Klemmstellung in seine Freigabestellung bewegt wird.

9. Greifvorrichtung (0) zum Greifen eines Behälters (R) nach einem der Ansprüche 1 bis 8, wobei es sich bei dem elastischen Rückstellorgan (7) um eine Feder handelt, die einerseits an einer zu dem Greifgriff (P1) gehörigen Anlagefläche (P2) und andererseits an einer zu dem Nockenfolger (6) gehörigen Anlagefläche anliegt.

10. Greifvorrichtung (0) zum Greifen eines Behälters (R) nach einem der Ansprüche 1 bis 9, wobei der Verbindungsmechanismus derart ausgelegt ist, dass die Verfahrbewegung des ersten Klemmorgans (1) von seiner zweiten Stellung in seine erste Stellung bewirkt, dass der Betätigungshebel (8) von der Klemmstellung in die Freigabestellung bewegt wird.

11. Greifvorrichtung (0) zum Greifen eines Behälters (R) nach einem der Ansprüche 1 bis 10, wobei der Betätigungshebel (8) über einen auf einem hinteren Teilabschnitt der Greifvorrichtung (0) angeordneten Drehzapfen (9) relativ zu dem Greifgriff (P1) schwenkbar angebracht ist, wobei die erste und die zweite Klemmfläche (S1, S2) des ersten und des zweiten Klemmorgans (1, 2) jeweils auf einem vorderen Teilabschnitt der Greifvorrichtung (0) angeordnet sind.

12. Greifvorrichtung (0) zum Greifen eines Behälters (R) nach einem der Ansprüche 1 bis 11, wobei ein von dem Greifgriff (P1) getragenes feuerfestes Teil (30) eine untere Seitenfläche des Greifgriffs (P1) bedeckt, wobei das feuerfeste Teil (30) an der zweiten Klemmfläche (S2) angrenzt und aus Metall gefertigt ist.

## Claims

1. Device (0) for gripping a container (R), comprising:
- a gripping handle (P1);
- a first clamping member (1) slidably mounted with respect to the gripping handle (P1) between first and second sliding positions and having a first clamping surface (S1);
- a second clamping member (2) having a second clamping surface (S2) facing the first clamping surface (S1) to form a container clamping pliers (R) between the first and second clamping surfaces (S1, S2);
- an actuation lever (8) pivotally mounted relative to the gripping handle (P1) between a clamping position and a release position, the gripping device (0) comprising a connection mechanism arranged so that movement of the actuation lever (8) from the release position towards the clamping position causes the first clamping member (1) to move from its first position towards its second position and bring the first clamping surface (S1) closer to the second clamping surface (S2), the gripping device (0) further comprising:
- an elastic return member (7) disposed to exert an elastic return force on the first clamping member (1) from the second position to the first position; and
- a locking mechanism comprising a pusher (5) movable with respect to the gripping handle (P1) between a locking position and an unlocking position, said locking mechanism being:
on the one hand, arranged so that when the pusher (5) is placed in the locking position, the locking mechanism prevents the movement of the actuation lever (8) placed in the clamping position towards the release position; and
- on the other hand, arranged so that when the pusher (5) is placed in the unlocking position, the locking mechanism allows the movement of the actuation lever (8) placed in the clamping position to the release position; and in that the connection mechanism comprises a cam (8a) carried by the actuation lever (8) and bearing against a cam follower (6) movably secured to a rod (10) belonging to the first clamping member (1) so that the cam follower (6) slides with the first clamping member (1) relative to the gripping handle (P1), **characterised in that** the cam follower (6) is arranged in a recess made in the rod (10) and is wedged between axial stops belonging to the rod (10) to oppose any movement of the cam follower (6) relative to the rod (10) along a longitudinal axis of the rod (10).

2. Device (0) for gripping a container (R) according to claim 1, wherein the locking mechanism comprises a lug (91) and a complementary stop (92), the actuation lever (8) being held in the clamping position when the lug (91) bears against the complementary stop (92) and being free to move from its clamping position to its release position when the lug (91) is away from the complementary stop (92), the pusher (5) being arranged so that movement of the pusher (5) from the locking position to the unlocking position causes the lug (91) to move away from the complementary stop (92) to allow the actuation lever (8) to move from its clamping position to its release position.

3. Device (0) for gripping a container (R) according to claim 2, wherein the lug (91) is formed on one among the pusher (5) and the actuation lever (8), the complementary stop (92) being formed on the other among the pusher (5) and the actuation lever (8).

4. Device (0) for gripping a container (R) according to claim 2, wherein the lug (91) is formed on one among the gripping handle (P1) and the actuation lever (8), the complementary stop being formed on the other among the gripping handle (P1) and the actuation lever (8).

5. Device (0) for gripping a container (R) according to any one of claims 2 to 4, further comprising an elastic return spring (3) arranged to exert an elastic return force on the pusher (5) from the unlocking position to the locking position.

6. Device (0) for gripping a container (R) according to any one of claims 1 to 5, wherein the rod (10) has an internal recess (10b) in which at least a portion of said elastic return member (7) extends, an axial edge (10b1) of the internal recess of the rod (10) being in axial abutment against the elastic return member (7) when the first clamping member (1) is in its first sliding position and said axial edge (10b1) of the internal recess (10b) of the rod (10) being away from the elastic return member (7) when the first clamping member (1) is in its second sliding position.

7. Device (0) for gripping a container (R) according to any one of claims 1 to 6, wherein a portion (P1x) of the first gripping handle (P1) and a portion (8x) of the actuation lever (8) are configured to abut against each other when the actuation lever (8) is in the release position and to be moved away from each other when the actuation lever (8) is in the clamping position, the portion (P1x) of the first gripping handle (P1) and the portion (8x) of the actuation lever (8) together defining the release position of the actuation lever (8) with respect to the gripping handle (P1).

8. Device (0) for gripping a container (R) according to any one of claims 1 to 7, wherein the cam (8a) and the cam follower (6) are arranged so that movement of the first clamping member (1) from its second position to its first position causes movement of the actuation lever (8) from its clamping position to its release position.

9. Device (0) for gripping a container (R) according to any one of claims 1 to 8, wherein the elastic return member (7) is a spring bearing on the one hand against a bearing surface (P2) belonging to the gripping handle (P1) and on the other hand against a bearing surface belonging to the cam follower (6).

10. Device (0) for gripping a container (R)according to any one of claims 1 to 9, wherein the connection mechanism is arranged such that movement of the first clamping member (1) from its second position to its first position causes movement of the actuation lever (8) from the clamping position to the release position.

11. Device (0) for gripping a container (R) according to any one of claims 1 to 10, wherein the actuation lever (8) is pivotally mounted with respect to the gripping handle (P1) by means of a pivot (9) disposed on a rear portion of the gripping device (0), the first and second clamping surfaces (S1, S2) of the first and second clamping members (1, 2) being disposed on a front portion of the gripping device (0).

12. Device (0) for gripping a container (R) according to any one of claims 1 to 11, wherein a firewall part (30) carried by the gripping handle (P1) covers a lower side surface of the gripping handle (P1), the firewall part (30) being adjacent to the second clamping surface (S2) and being made of metal.
